# EUROPÄISCHE PATENTANMELDUNG

(11) **EP 1 054 495 A1**
(43) Veröffentlichungstag der Anmeldung: **22.11.2000**
(21) Anmeldenummer: 00810395.4
(22) Anmeldetag: 09.05.2000
(51) Int. Cl.: H02G 5/06

(54) **Leitungsabschnitt einer gasisolierten Leitung und Verfahren zur Herstellung eines solchen Leitungsabschnitts**

(30) Priorität: 17.05.1999 DE 19922588
(71) Anmelder: ABB Hochspannungstechnik AG, 8050 Zürich (CH)
(72) Erfinder: Vestner, Markus, 8238 Büsingen (CH); Zbinden, Markus c/o Zbinden, Hans, 8600 Dübendorf (CH); Rhyner, Urs, 8134 Adliswil (CH)
(74) Vertreter: ABB Patent Attorneys

(57) **Zusammenfassung**

Der Leitungsabschnitt der gasisolierten Leitung enthält einen im wesentlichen zylindersymmetrisch ausgebildeten, hochspannungsführenden Stromleiter (1), ein isoliergasgefülltes Kapselungsrohr, ein den Stromleiter (1) auf dem Kapselungsrohr abstützender Stützisolator (3) und ein Verbindungselement, welches den Stützisolator (3) mit dem Stromleiter (1) verbindet. Das Verbindungselement in Form eines Federblechs (40) enthält blattfederartig ausgebildete Schnappelemente (41, 42) die in der im Stützisolator (3) eingelassenen Nut (39) einschnappen, und die mit den an den Wänden der Nut anliegenden Kanten den Stützisolator (3) auf dem Stromleiter (1) fixieren.

Ein solcher Leitungsabschnitt kann in einfacher Weise hergestellt werden und zeichnet sich durch gute dielektrische und mechanische Eigenschaften aus.

## Beschreibung

### TECHNISCHES GEBIET

Bei der Erfindung wird ausgegangen von einem Leitungsabschnitt einer gasisolierten Leitung nach dem Oberbegriff von Patentanspruch 1 sowie von einem Verfahren zum Herstellen eines solchen Leitungsabschnitts.

### STAND DER TECHNIK

Ein Leitungsabschnitt der eingangs genannten Art ist in US 2,355,111 (Rouault) beschrieben.
In diesem Leitungsabschnitt ist ein Stützisolator in einem starr ausgebildeten, zylinderrohrförmigen ersten Stromleiter angeordnet und hält dort einen zylindersymmetrisch ausgeführten zweiten Stromleiter zentral auf der Achse des Kapselungsrohrs. Der Stützisolator weist auf der den zentralen Stromleiter tragenden Innenseite eine halbkreisförmige Ringnut auf. Der zentrale Stromleiter enthält im Bereich des Stützisolators eine Radialbohrung. Ein aus einer Feder und zwei halbkugelförmigen, auf beiden Seiten der Feder aufgesteckten Kappen gebildetes Verbindungselement ist in die Radialbohrung eingepasst. Die Feder drückt die beiden Kappen radial nach aussen in die Ringnut im Stützisolator. Dadurch ist der Stützisolator in axialer Richtung gesichert.
Bei dieser Vorrichtung müssen in dem Stromleiter Bohrungen eingebracht werden. Dies ist verhältnismässig aufwendig. Zudem ist nicht auszuschliessen, dass dadurch die dielektrischen Eigenschaften des Leitungsabschnitts beeinträchtigt werden.
Ein Leitungsabschnitt der eingangs genannten Art ist ausserdem in US 3,391,243 beschrieben.

In diesem Leitungsabschnitt ist ein Stützisolator mit einem ersten, zylindersymmetrisch ausgeführten Stromleiter fest verbunden und mittels einem Verbindungselement an einem zylinderrohrförmigen zweiten Stromleiter gesichert. Das Verbindungselement umfasst zwei blattfederartig ausgebildete Schnappelemente, die in einer Umfangsnut im zweiten Stromleiter eingepasst sind. Die Schnappelemente sind derart ausgebildet, dass sie bei einer grösseren Belastung in axialer Richtung aus der Umfangsnut springen.

### KURZE DARSTELLUNG DER ERFINDUNG

Der Erfindung, wie sie in Patentanspruch 1 angegeben ist, liegt die Aufgabe zugrunde, einen Leitungsabschnitt der eingangs genannten Art zu schaffen, welcher in einfacher und kostengünstiger Weise hergestellt und gewartet werden kann und welcher sich durch hohe Stabilität sowie gute dielektrische Eigenschaften auszeichnet.
Der Leitungsabschnitt nach der Erfindung setzt sich aus einem stromführenden Leiter, einem isoliergasgefüllten Kapselungsrohr, einem Stützisolator und einem Verbindungselement zusammen. Das Verbindungselement umfasst ein Federblech mit nach Art einer Blattfeder ausgebildeten Schnappelementen. Diese Schnappelemente liegen mit mindestens einer Kante in am Stützisolator und/ oder am Stromleiter eingebrachten Nuten den Stützisolator am Stromleiter sichernd an.
Dieser Leitungsabschnitt ist in vorteilhafter Weise an eine Herstellung in einem vollautomatisierten Prozess angepasst. Die einzelnen Elemente, wie Stromleiter, Stützisolator, Kapselungsrohr und Verbindungselement werden in einem für eine Massenfertigung geeigneten Verfahren erzeugt. Die Herstellung des Leitungsabschnitts erfolgt im wesentlichen durch Zusammenstecken respektive Zusammenschieben der einzelnen Elemente. Von besonderem Vorteil ist hierbei, dass die zum Verbinden von Stützisolator und Stromleiter erforderliche Nut vom Stützisolator vollständig abgeschirmt ist. Dies hilft dielektrische Probleme zu verhindern.
In einer bevorzugten Ausführung des Leitungsabschnitts nach der Erfindung wird am Stromleiter keine spanabhebende Bearbeitung vorgenommen, sondern auf dem Stromleiter ein Verbindungselement befestigt, welches den Stützisolator mit Schnappelementen festhält. Neben den optimalen dielektrischen Eigenschaften durch elektrisch leitende Kontaktierungen über das Verbindungselement zeichnet sich diese Ausführung des Leitungsabschnitts nach der Erfindung dadurch aus, dass der Stützisolator durch Ein- und Aufschnappen in einfacher Weise und ohne durch das Aufschieben auf dem Stromleiter Partikel zu erzeugen montiert werden kann, dass die Stromleitertoleranzen dank optimaler Positionierung des Verbindungselements vernachlässigt werden können und dass eine sehr gute Kraft- aber praktisch keine Momentübertragung vom Stromleiter auf den Stützisolator stattfindet.

### KURZE ERLÄUTERUNG DER FIGUREN

Bevorzugte Ausführungsbeispiele der Erfindung und die damit erzielbaren weiteren Vorteile werden nachfolgend anhand von Zeichnungen näher erläutert. Hierbei zeigt
- Fig. 1: eine Aufsicht auf einen schematisch dargestellten Leitungsabschnitt einer gasisolierten Leitung nach der Erfindung mit einem Stromleiter, einem Kapselungsrohr, einem Stützisolator und einem Verbindungselement,
- Fig. 2: eine Aufsicht auf einen radial geführten Schnitt durch einen Teil einer ersten Ausführungsform des Leitungsabschnitts nach der Erfindung,
- Fig. 3: eine Aufsicht in Pfeilrichtung auf den längs III-III geführten Schnitt durch den Leitungsabschnitt nach Fig. 2,
- Fig. 4: eine Aufsicht auf einen längs IV-IV geführten Schnitt durch den Leitungsabschnitt nach Fig. 3, während (a) und nach (b) dem Aufschieben des Stützisolators auf den Stromleiter,
- Fig. 5: eine Aufsicht auf einen radial geführten Schnitt durch einen Teil einer zweiten Ausführungsform des Leitungsabschnitts nach der Erfindung,
- Fig. 6: eine Aufsicht in Pfeilrichtung auf den längs VI-VI geführten Schnitt durch den Leitungsabschnitt nach Fig. 5,
- Fig. 7: eine Aufsicht auf einen längs VII-VII geführten Schnitt durch den Leitungsabschnitt nach Fig. 6, während (a) und nach (b) dem Aufschieben des Stützisolators auf den Stromleiter,
- Fig. 8: eine erste Aufsicht auf einen axial geführten Schnitt durch eine dritte Ausführungsform des Leitungsabschnitts nach der Erfindung während (a) und nach (b) dem Aufschieben des Stützisolators auf den Stromleiter,
- Fig. 9: eine zweite Aufsicht auf den axial geführten Schnitt durch die dritte Ausführungsform des Leitungsabschnitts nach Fig. 8,
- Fig. 10: eine Aufsicht auf einen axial geführten Schnitt durch eine vierte Ausführungsform des Leitungsabschnitts nach der Erfindung während (a, b) und nach (c) dem Aufschieben des Stützisolators auf den Stromleiter, und
- Fig. 11: eine Aufsicht auf einen radial geführten Schnitt durch eine fünfte Ausführungsform des Leitungsabschnitts nach der Erfindung während (a) und nach (b) dem Aufschieben des Stützisolators auf den Stromleiter.

### WEGE ZUR AUSFÜHRUNG DER ERFINDUNG

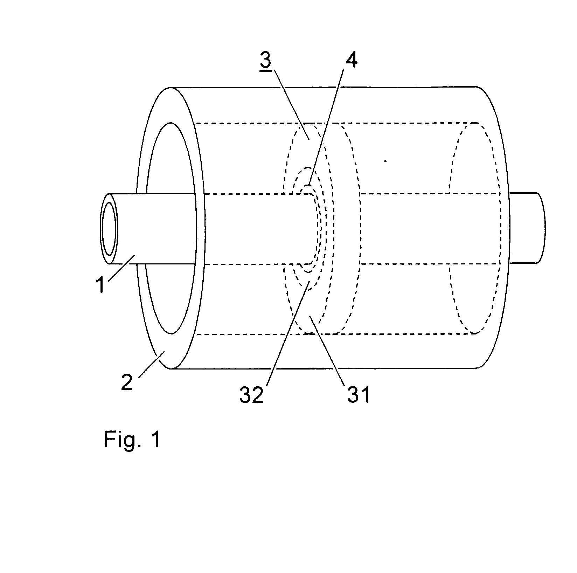

In allen Figuren beziehen sich gleiche Bezugszeichen auf gleichwirkende Teile. Ein in Fig. 1 dargestellter Leitungsabschnitt einer gasisolierten Leitung weist einen auf einem Stützisolator 3 in einem Kapselungsrohr 2 zentral gelagerten und mit dem Stützisolator 3 mittels eines Verbindungselements 4 verbundenen Stromleiter 1 auf. Der Stromleiter 1 ist axialsymmetrisch und hohl ausgebildet und befindet sich auf Hochspannungspotential.

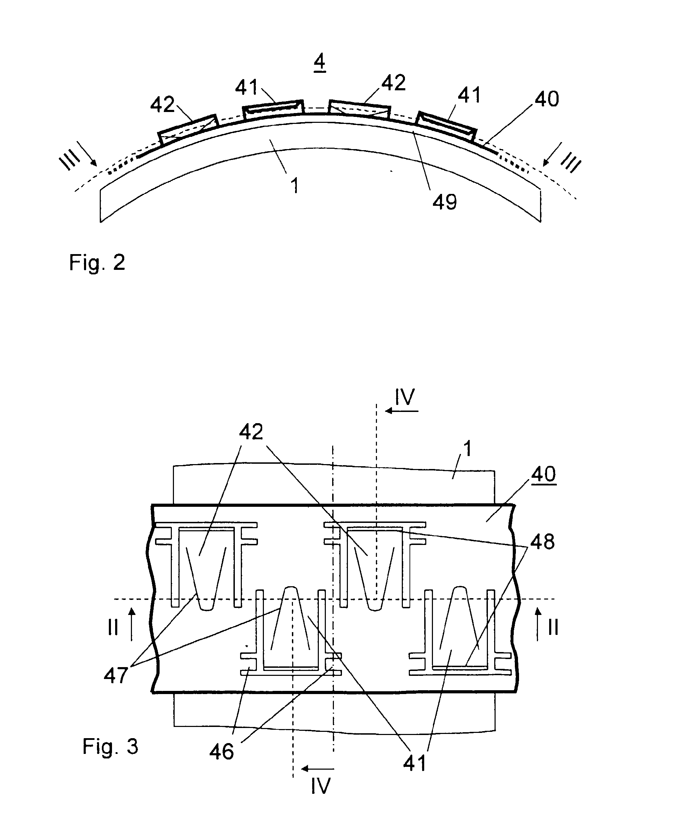

Das Kapselungsrohr 2 ist mit einem Isoliergas, wie etwa SF₆, von bis zu einigen bar Druck gefüllt und besteht aus einem leitfähig beschichteten Isolierstoff, wobei als Material für den Isolierstoff vorzugsweise ein gegebenenfalls füllstoffverstärktes, insbesondere faserverstärktes, Duromer, etwa ein Thermoplast, wie insbesondere ein Polyäthylen, oder ein Duromer, wie insbesondere ein Epoxid, verwendet wird. Aus dem selben Isolierstoff ist auch mehrheitlich der Stützisolator 3 gefertigt. Der Stützisolator umgibt den Stromleiter zumindest teilweise ringförmig. Auf der dem Stromleiter zugewandten Oberfläche ist eine elektrisch halbleitende Schicht als Steuerelektrode 32 eingelassen, die für einen optimalen Feldverlauf im Übergangsbereich zwischen dem Stromleiter 1 und dem isolierenden Material 31 sorgt. Der Stützisolator kann beispielsweise scheibenförmig oder mit Stützbeinen ausgestattet sein.
Eine erste Ausführungsform des erfindungsgemässen Leitungsabschnitts ist in den Fig. 2 bis Fig. 4 dargestellt. Auf dem nicht spanabhebend behandelten Stromleiter 1 ist eine Klebstoffschicht 49 aufgebracht. Mit der Klebstoffschicht 49 wird das Verbindungselement 4 in Form eines elektrisch leitenden Federblechs 40 am Stromleiter festgeklebt. Das Federblech 40 enthält nach Art einer Blattfeder ausgebildete Schnappelemente 41 und 42, die von der Stromleiteroberfläche aus nach aussen gebogen sind. Die freien Ende der beiden Schnappelemente 41 und 42 zeigen axial in entgegengesetzte Richtungen. Die freien Ende der Schnappelemente sind an der Kante zum Stromleiter hin abgerundet. Diese Abrundung begünstigt die Herstellung des Leitungsabschnitts und dienen zu dessen Schutz. Die Schnappelemente 41 und 42 sind an den Biegekanten mit nach aussen gepressten Ausbuchtungen als federkrafterhöhende Verstärkungselemente 47 versehen. Der Stützisolator 3 dieser ersten Ausführung des erfindungsgemässen Leitungsabschnitts ist mit einer Nut 39 in der dem Stromleiter zugewandten Oberfläche versehen. Diese Stützisolatornut 39 ist ringförmig und mit senkrecht zur Oberfläche des Stützisolators angeordneten Seitenwänden ausgebildet, an denen die Schnappelemente 41 mit der Kante am freien Ende anliegen.

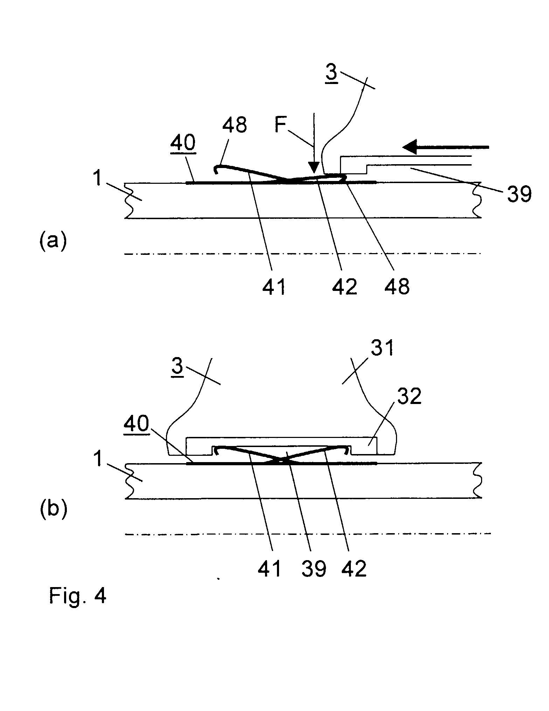

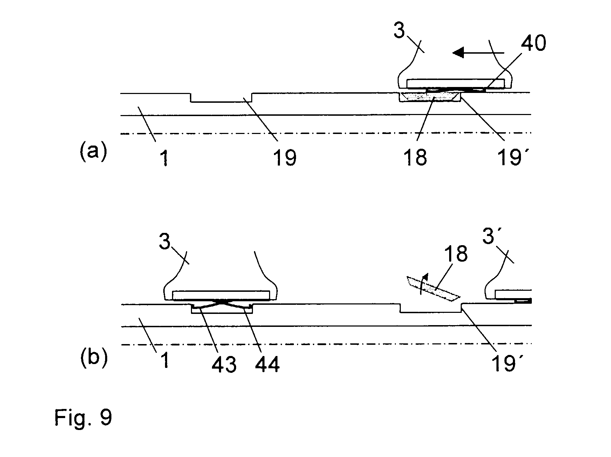

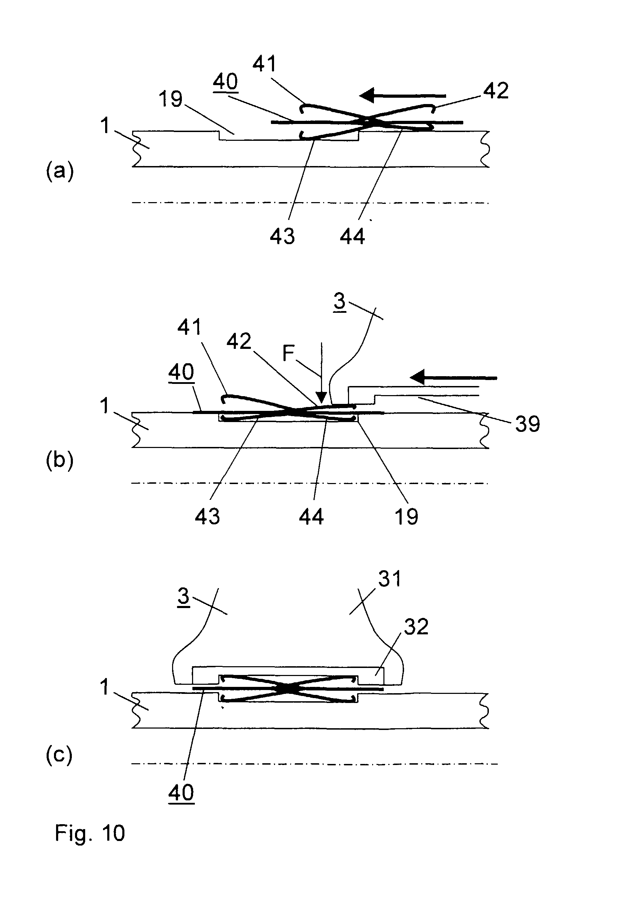

Das erfindungsgemässe Verfahren zur Herstellung dieser ersten Ausführungsform des Leitungsabschnitts sieht zuerst das Festkleben des Federblechs 40 auf dem Stromleiter 1 vor. Dann wird der Stromleiter 1 in das Kapselungsrohr 2 eingeführt und anschliessend wird der Stützisolator 3 in Pfeilrichtung auf den Stromleiter 1 geschoben. Dabei wird auf das Schnappelement 42 eine Vorspannkraft F ausgeübt, die es ermöglicht, den Stützisolator über die abgerundete Kante 48 des freien Endes des Schnappelements 42 zu schieben (Fig. 4a). Ist dies erfolgt, wird die Vorspannkraft F gelöst und der Stützisolator weitergeschoben, bis beide Schnappelemente 41 und 42 in der Stützisolatornut 39 eingeklickt sind. Die Schnappelemente 41 und 42 drücken in axialer und in radialer Richtung gegen die Wände der Stützisolatornut 39 und verbinden somit den Stützisolator 3 mit dem Stromleiter 1 (Fig. 4b). Neben dieser einfachen Herstellung ist besonders hervorzuheben, dass in dem erfindungsgemässen Leitungsabschnitt Stromleitertoleranzen durch die optimale Positionierung der Federbleche ausgeglichen werden. Kostspielige und komplizierte Bearbeitungsschritte bei der Befestigung der Stützisolatoren entfallen. Der Stromleiter wird vom Stützisolator federnd getragen, was eine sehr gute Kraftübertragung vom Stromleiter auf den Stützisolator bedeutet während gleichzeitig praktisch keine Momentübertragung möglich ist. Da zudem der Stromleiter keinerlei Nuten oder andere Oberflächenveränderungen aufweist, zeichnet sich der Leitungsabschnitt durch ausgezeichnete dielektrische Eigenschaften aus.

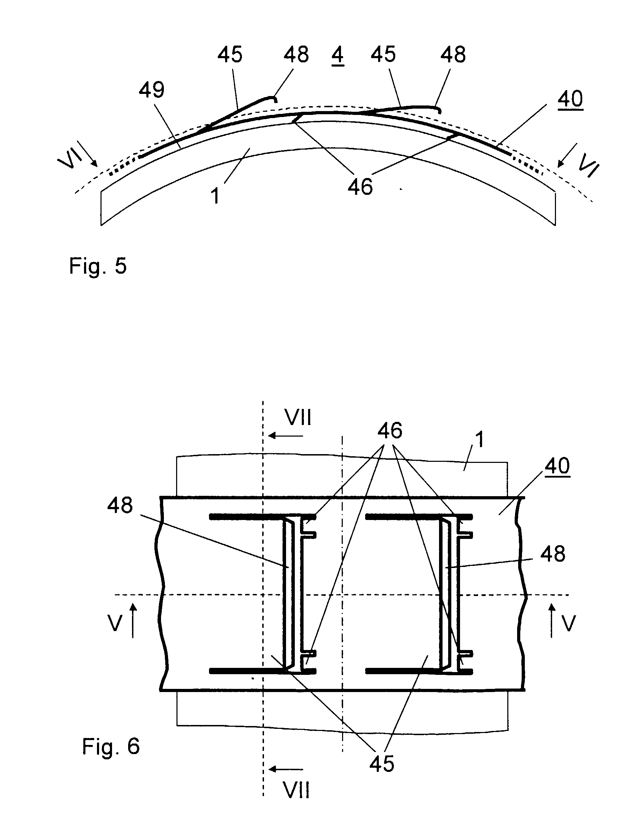

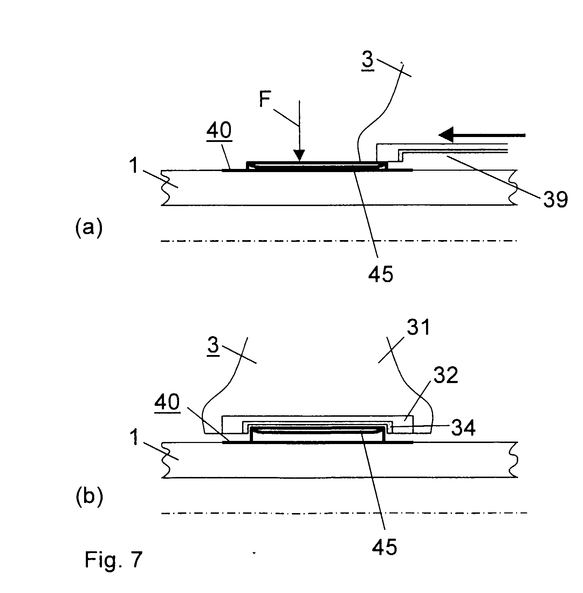

Die Fig. 5 bis Fig. 7 zeigen eine zweite Ausführungsform des erfindungsgemässen Leitungsabschnitts, die sich von der ersten Ausführungsform dadurch unterscheidet, dass die Kanten 48 der freien Ende der Schnappelemente 45 axial verlaufen, was insbesondere die Herstellung des Leitungsabschnitts, speziell das Schieben des Stützisolators 3 über die Schnappelemente 45 erleichtert. Die Bewegungsfreiheit des Stützisolators 3 wird in axialer Richtung durch die beiden Seitenkanten der Schnappelemente 45 begrenzt. Damit diese Seitenkanten das Halbleitermaterial der Steuerelektrode 32 nicht beschädigen, sind die Wände der Stützisolatornut 39 mit einem Verstärkungselement 34 aus einem harten Material, wie beispielsweise Stahl, versehen. Besonders vorteilhaft sind auf dem Federblech angeordnete Kontaktelemente 46, welche nach innen, zur Stromleiteroberfläche hin gebogen sind. Diese Kontaktelemente 46 sorgen für den Potentialausgleich zwischen dem Stromleiter 1 und dem Federblech 40.

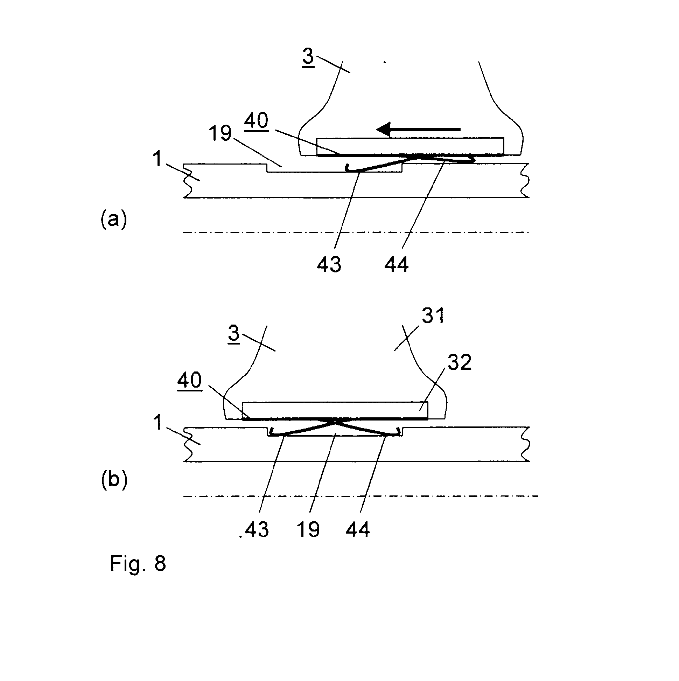

Die Fig. 8 zeigt eine dritte Ausführungsform des erfindungsgemässen Leitungsabschnitts. Der Stromleiter 1 ist mit einer ringförmigen Nut 19 in der Oberfläche versehen, die senkrecht zur Oberfläche ausgebildete Seitenwände aufweist. Das Verbindungselement 4 in Form eines elektrisch leitenden Federblechs 40 ist mit dem Stützisolator 3 beispielsweise durch Schrauben, Nieten oder Kleben fest verbunden. Das Federblech 40 enthält nach Art einer Blattfeder ausgebildete Schnappelemente 43 und 44, die von der Stützisolatoroberfläche aus nach aussen gebogen sind.
Im Verfahren zur Herstellung dieser dritten Ausführungsform des erfindungsgemässen Leitungsabschnitts wird zuerst der Stromleiter 1 in das Kapselungsrohr 2 eingeführt und anschliessend der Stützisolator 3 mit daran befestigtem Federblech 40 in Pfeilrichtung über den Stromleiter 1 geschoben. Dabei sind die Schnappelemente 43 und 44 zusammengedrückt (Fig. 8a). Der Stützisolator 3 wird soweit geschoben, bis die Schnappelemente 43 und 44 in der dafür vorgesehenen Stromleiternut 19 einklicken. Die Schnappelemente 43 und 44 drücken in axialer und in radialer Richtung gegen die Wände der Stromleiternut 19 und verbinden somit den Stützisolator 3 mit dem Stromleiter 1 (Fig. 8b)
Ein bezüglich einer möglichst einfachen Herstellung optimiertes erfindungsgemässes Verfahren zur Herstellung der dritten Ausführungsform des Leitungsabschnitts mit mehreren Stützisolatoren auf einem Stromleiter ist in Fig. 9 dargestellt. Zuerst wird der Stromleiter 1 in das Kapselungsrohr 2 eingeführt und anschliessend werden die Stützisolatoren 3 mit daran befestigten Federblechen 40 auf den Stromleiter 1 geschoben. Dabei kann ein Stützisolator 3 über eine Stromleiternut 19' geschoben werden, die für einen anderen Stützisolator 3' vorgesehen ist, indem vor dem Aufschieben des Stützisolators 3 der Stromleiternut 19' ein Nutdeckel 18 aufgesetzt wird. Der Stützisolator 3 wird in Pfeilrichtung über Stromleiternut Nut 19' mit aufgesetztem Nutdeckel 18 geschoben, ohne dass die Schnappelemente 43 und 44 in der Stromleiternut 19' einklicken (Fig. 9a). Wenn alle Stützisolatoren 3, die vor dem für die Stromleiternut 19' vorgesehenen Stützisolator 3' auf den Stromleiter aufgeschoben werden müssen über die Stromleiternut 19' geschoben worden sind, wird der Nutdeckel 18 von der Stromleiternut 19' entfernt (Fig. 9b). Danach wird der Stützisolator 3' auf den Stromleiter aufgeschoben bis die Schnappelemente in der dafür vorgesehen Stromleiternut 19' einklicken.
In einer vierten Ausführungsform des erfindungsgemässen Leitungsabschnitts nach Fig. 10 ist in den Stromleiter 1 eine ringförmige Nut 19 und in den Stützisolator 3 eine ringförmige Nut 39 eingelassen. Das Verbindungselement 4, in Form eines Federblechs 40, enthält auf beiden Seiten nach Art einer Blattfeder ausgebildete Schnappelemente 41 und 42 respektive 43 und 44, die nach aussen gebogen sind.
Das Verfahren zur Herstellung dieser vierten Ausführungsform des erfindungsgemässen Leitungsabschnitts sieht vor, dass zuerst der Stromleiter 1 in das Kapselungsrohr 2 eingeführt wird. Anschliessend wird das Federblech 40 in Pfeilrichtung auf den Stromleiter 1 aufgeschoben, bis die Schnappelemente 43 und 44 in der dafür vorgesehenen Stromleiternut 19 einklicken (Fig. 10a). Dann wird auf das Schnappelement 42 eine Vorspannkraft F ausgeübt, die es ermöglicht, den Stützisolator über das Schnappelement 42 zu schieben (Fig. 10b). Ist dies erfolgt, wird die Vorspannkraft F gelöst und der Stützisolator weitergeschoben, bis beide Schnappelemente 41 und 42 in der Stützisolatornut 39 eingeklickt sind und somit der Stützisolator 3 mit dem Stromleiter 1 verbunden ist (Fig. 10c).

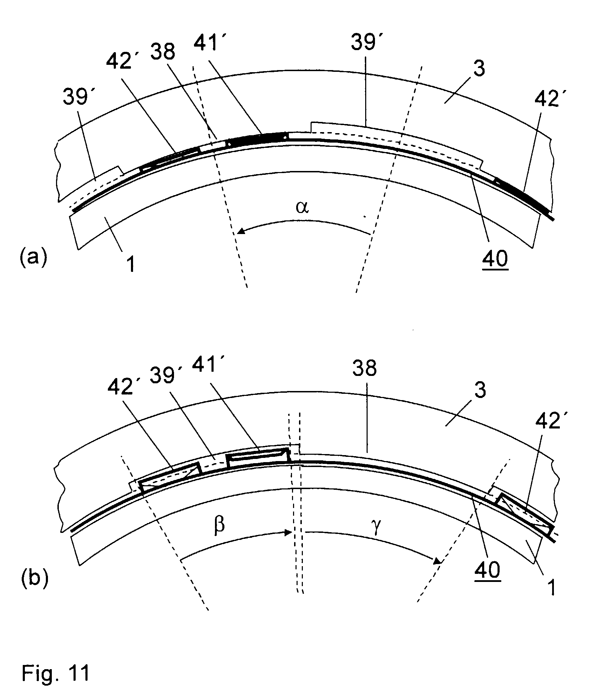

Fig. 11 zeigt eine fünfte Ausführungsform des erfindungsgemässen Leitungsabschnitts, welche eine besonders einfache Herstellung des Leitungsabschnitts ermöglicht. Diese Ausführungsform ergibt sich durch einfache Weiterentwicklung der ersten Ausführungsform des erfindungsgemässen Leitungsabschnitts nach den Fig. 2 bis Fig. 4. Dabei sind die Schnappelemente 41' und 42' und die nicht durchgehend eingelassene Stützisolatornut 39' derart angeordnet, dass sich nutfreie Abschnitte 38 auf dem Stützisolator 3 über einen Winkel γ erstrecken, der mindestens so gross ist wie ein Winkel β, über den sich die Schnappelemente 41' und 42' erstrecken. Dies ermöglicht eine stark vereinfachte Herstellung von Leitungsabschnitten mit mehreren Stützisolatoren 3 auf einem Stromleiter 1, auf dem bereits mehrere Federbleche 40 festgeklebt sind. Zuerst wird der Stromleiter 1 in das Kapselungsrohr 2 eingeführt und anschliessend werden die Stützisolatoren 3 auf den Stromleiter 1 geschoben. Dabei kann ein Stützisolator 3 über ein Federblech 40 hinweggeschoben werden, ohne dass die Schnappelemente 41' und 42' in der Stützisolatornut 39' einschnappen, indem der Stützisolator 3 vor dem Aufschieben gegenüber der vorgesehenen Position um einen bestimmten Winkel α abgedreht wird (Fig. 11a). Auf diese Weise ist es möglich, einen Stützisolator 3 über mehrere, mit dem Stromleiter 1 fest verbundene Federbleche 40 zu schieben. Um den Stützisolator 3 auf dem dafür vorgesehene Federblech 40 zu fixieren, wird der Stützisolator 3 vor dem Aufschieben auf das Federblech 40 in die vorgesehene Position zurückgedreht (Fig. 11b).

### BEZUGSZEICHENLISTE

- 1: Stromleiter
- 18: Nutdeckel
- 19, 19': Stromleiternut
- 2: Kapselungsrohr
- 3, 3': Stützisolator
- 31: Isoliermaterial
- 32: Halbleitermaterial
- 34: Verstärkungselement
- 38: Nutfreier Bereich
- 39, 39': Stützisolatornut
- 4: Verbindungselement
- 40: Federblech
- 41, 41', 42, 42': Stützisolatorseitiges, axial gerichtetes Schnappelement
- 43, 44: Stromleiterseitiges, axial gerichtetes Schnappelement
- 45: Stützisolatorseitiges, tangential gerichtetes Schnappelement
- 46: Kontaktelement
- 47: Versteifungselement
- 48: Kante am freien Ende des Schnappelements
- 49: Klebstoff
- F: Vorspannkraft
- α: Drehwinkel
- γ: Ausdehnungswinkel des nutfreien Bereichs
- β: Ausdehnungswinkel der Schnappelemente

## Patentansprüche

1. Leitungsabschnitt einer gasisolierten Leitung mit
- einem im wesentlichen zylindersymmetrisch ausgebildeten, hochspannungsführenden Stromleiter (1), mit
- einem isoliergasgefüllten Kapselungsrohr (2), mit
- mindestens einem den Stromleiter (1) auf dem Kapselungsrohr (2) abstützenden Stützisolator (3), mit
- einem mindestens ein Schnappelement (41, ..., 45, 41', 42') enthaltenden Verbindungselement (4), welches den Stützisolator (3) mit dem Stromleiter (1) verbindet, und mit
- mindestens einer in den Stützisolator eingelassenenen Nut (19, 19', 39, 39') zum Einschnappen des Schnappelements (41, ..., 45, 41', 42'),
dadurch gekennzeichnet, dass
- das Verbindungselement (4) ein Federblech (40) mit einem nach Art einer Blattfeder eingeformten Schnappelement (41, ..., 45, 41', 42') enthält, dass
- das Schnappelement (41, ..., 45, 41', 42') ein als Endkante (48) ausgebildetes freies Ende aufweist sowie zwei daran anschliessende Seitenkanten, und dass
- das Schnappelement (41, ..., 45, 41', 42') mit der Endkante (48) und/ oder mit mindestens einer Seitenkante den Stützisolator (3) in axialer Richtung sichernd in der Nut (19, 19', 39, 39') anliegt.

2. Leitungsabschnitt nach Anspruch 1 , dadurch gekennzeichnet, dass
- das Verbindungselement (4) aus elektrisch leitendem Material besteht und mit dem Stromleiter (1) und dem Stützisolator (3) elektrisch leitend verbunden ist.

3. Leitungsabschnitt nach einem der Ansprüche 1 oder 2, dadurch gekennzeichnet, dass
- das Federblech (40) mindestens ein Kontaktelement (46) enthält.

4. Leitungsabschnitt nach einem der Ansprüche 1 bis 3, dadurch gekennzeichnet, dass
- in das nach Art einer Blattfeder geformte Schnappelement (41,..., 45, 41', 42') ein Versteifungselement (47) eingelassen ist, und/ oder dass
- die Endkante (48) des Schnappelements zum Federblech (40) hin abgerundet ist.

5. Leitungsabschnitt nach einem der Ansprüche 1 bis 4, dadurch gekennzeichnet, dass
- das Federblech (40) mit dem Stromleiter (1) fest verbunden ist.

6. Leitungsabschnitt nach Anspruch 5, dadurch gekennzeichnet, dass
- das Federblech (40) mit dem Stromleiter (1) mittels einer Klebeschicht (49) fest verbunden ist.

7. Leitungsabschnitt nach einem der Ansprüche 5 oder 6, dadurch gekennzeichnet, dass
- die Stützisolatornut (39, 39') ein Verstärkungselement (34) enthält.

8. Leitungsabschnitt nach einem der Ansprüche 5 bis 7, dadurch gekennzeichnet, dass
- sich die mindestens eine Stützisolatornut (39') nicht über den ganzen Umfang der dem Stromleiter zugewandten Oberfläche des Stützisolators (3) erstreckt, und dass
- sich der mindestens eine nutfreie Bereich (38) der Oberfläche des Stützisolators über einen Winkel (γ) erstreckt, der mindestens so gross ist, wie der Winkel (β), über den sich das mindestens eine Schnappelement (41', 42') erstreckt.

9. Leitungsabschnitt nach einem der Ansprüche 1 bis 4, dadurch gekennzeichnet, dass
- die mindestens eine Nut (19, 19') in den Stromleiter (1) eingelassen ist, und dass
- das Federblech (40) mit dem Stützisolator (3) fest verbunden ist.

10. Leitungsabschnitt nach einem der Ansprüche 1 bis 4, dadurch gekennzeichnet, dass
- mindestens zwei Nuten vorgesehen sind, von denen die eine Nut (39) im Stützisolator (3) und die andere Nut (19, 19') im Stromleiter (1) eingelassen ist, und dass
- das Federblech (40) mindestens ein mit der Stützisolatornut (39) zusammenwirkendes Schnappelement (41, 42) und mindestens ein mit der Stromleiternut (19, 19') zusammenwirkendes Schnappelement (43, 44) enthält.

11. Verfahren zum Herstellen des Leitungsabschnitt nach einem der Ansprüche 5 bis 8, bei dem der Stützisolator (3) mit dem Stromleiter (1) verbunden wird, dadurch gekennzeichnet, dass
- das Verbindungselement (4) auf den Stromleiter (1) aufgeklebt wird, und dass
- anschliessend der Stützisolator (3) in axialer Richtung über das Verbindungselement (4) geschoben wird, bis das Schnappelement (41, 42, 45) in die Stützisolatornut (39) einschnappt.

12. Verfahren nach Anspruch 11, dadurch gekennzeichnet, dass
- das mindestens eine Schnappelement (41, 42, 45) vor dem Aufschieben des Stützisolators (3) mit einer Vorspannkraft (F) beaufschlagt wird, und dass
- die Vorspannkraft (F) solange aufrechterhalten wird, bis der Stützisolator (3) wenigstens teilweise über das Schnappelement (41, 42, 45) geschoben ist.

13. Verfahren zum Herstellen des Leitungsabschnitt nach einem der Ansprüche 9 oder 10, dadurch gekennzeichnet, dass
- in einer zweiten (19') von mindestens zwei, axial versetzten Stromleiternuten (19, 19') ein Nutdeckel (18) eingesetzt wird, dass
- dann der Stützisolator (3) über die zweite Stromleiternut (19') bis zum Einklicken der Schnappelemente (43, 44) des Federblechs (40) in der ersten Stromleiternut (19) geschoben wird, und dass
- anschliessend der Nutdeckel (18) aus der zweiten Stromleiternut (19') entfernt wird.
